# DEMANDE DE BREVET EUROPEEN

(11) **EP 1 816 054 A1**
(43) Date de publication de la demande: **08.08.2007**
(21) Numéro de dépôt: 07300764.3
(22) Date de dépôt: 01.02.2007
(51) Int. Cl.: B62D 21/17

(54) **Plancher, ensemble d'un plancher et d'un conducteur électrique, et procède d'assemblage de véhicule automobile**

(30) Priorité: 01.02.2006 FR 0600924
(71) Demandeur: Compagnie Plastic Omnium, 69007 Lyon (FR)
(72) Inventeur: Andre, Gérald, 01500 Amberieu en Bugey (FR)
(74) Mandataire: Remy, Vincent Noel Paul

(57) **Abrégé**

La présente invention concerne un plancher de véhicule automobile.

Ce plancher (10) est réalisé en matière plastique et comporte des moyens de guidage d'au moins un conducteur électrique (30) de courants porteurs, ces moyens de guidage étant réalisés d'un seul tenant avec le plancher.

## Description

La présente invention concerne un plancher de véhicule automobile, un ensemble d'un plancher et d'un conducteur électrique, ainsi qu'un procédé d'assemblage d'un véhicule.

On connaît déjà un plancher de véhicule automobile, s'étendant sur une certaine surface du véhicule de façon à servir de barrière entre le sol et l'intérieur du véhicule, pardessus lequel un revêtement tel qu'une moquette est souvent rapporté. Dans la suite, le plancher est défini comme s'étendant au moins sous un siège arrière de passager, suffisamment pour servir de repose-pied lorsque des passagers sont assis, d'assise de banquette ou de support à des sièges indépendants. Généralement, le plancher est en métal, réalisé d'un seul tenant avec la caisse du véhicule. La « caisse » désigne la structure principale du véhicule, comprenant souvent deux bas de caisse longitudinaux, plusieurs traverses, des montants latéraux, un pavillon.

On sait par ailleurs que les véhicules automobiles comportent de plus en plus de composants électriques ou électroniques, agencés à des emplacements très variés du véhicule : planche de bord, portes, hayon, sièges, toit, moteur, etc.. Il en résulte que de nombreux conducteurs électriques isolés, tels que des fils principalement ou des câbles plats, sont à prévoir sur le véhicule, aussi bien pour alimenter ces composants que pour les relier entre eux.

Généralement, ces conducteurs sont regroupés sous forme de torons enrubannés qui sont ensuite guidés sur la caisse du véhicule, plus précisément le long des bas de caisse latéraux, des traverses ou des montants verticaux. Les moyens utilisés pour le guidage des conducteurs assurent souvent, non seulement leur positionnement, mais également leur fixation sur la caisse, par exemple par collage ou encliquetage, en rapportant des clips ou encore en utilisant des gaines.

Le problème consiste en ce que la caisse a une configuration peu accessible pour un opérateur, si bien que le guidage et la fixation des conducteurs sont difficiles et coûteux en main d'oeuvre.

La présente invention vise à fournir un moyen pour faciliter le guidage et la fixation de conducteurs électriques sur un véhicule.

A cet effet, l'invention a pour objet un plancher de véhicule automobile, caractérisé en ce qu'il est réalisé en matière plastique et comporte des moyens de guidage d'un conducteur électrique, ces moyens de guidage étant réalisés d'un seul tenant avec le plancher.

Ainsi, grâce à l'invention, le plancher, réalisé en matière plastique, est rapporté sur la caisse au cours de l'assemblage du véhicule, si bien que ce n'est plus sur la caisse du véhicule, du moins plus seulement, que les conducteurs électriques sont guidés, mais sur ce plancher. Les inventeurs à l'origine de l'invention ont eu l'idée d'utiliser le plancher pour servir de support à des conducteurs électriques. Il en ressort plusieurs avantages.

Tout d'abord, le plancher étant réalisé en matière plastique, il est plus facile et économique d'y intégrer des moyens de guidage, eux-même généralement en matière plastique, que sur une caisse métallique.

En outre, par sa forme et ses dimensions, le plancher est beaucoup plus accessible aux opérateurs que la caisse, notamment, il peut être tourné, si bien qu'il est plus facile de positionner les conducteurs, avec leurs moyens de guidage, sur le plancher. Ce positionnement est d'autant plus facilité dans le cas où le plancher est équipé des conducteurs en dehors de la chaîne de montage et est ensuite rapporté sur la caisse du véhicule.

Un autre avantage réside dans le fait qu'il est plus facile d'assurer l'étanchéité d'une pièce en matière plastique plutôt que celle d'une pièce métallique. En effet, on sait que chaque fois que l'on fait un trou dans une partie de la caisse métallique, afin d'y ménager un moyen de guidage d'un conducteur, ce trou est susceptible de laisser passer de l'eau ou de l'air depuis l'extérieur du véhicule vers l'intérieur, ce qui rompt l'étanchéité souhaitée de l'intérieur du véhicule. Il en résulte que l'on doit prévoir des moyens supplémentaires autour du trou pour assurer son étanchéité. De tels moyens d'étanchéité ne sont plus nécessaires si les moyens de guidage ne sont pas ménagés à l'aide de trous mais intégrés d'un seul tenant au plancher.

Enfin, en ménageant les conducteurs sur le plancher plutôt que sur la caisse, on peut les faire passer au centre du véhicule et non plus seulement par les bas de caisse latéraux. Le plancher s'avère être un emplacement particulièrement pratique pour recevoir les conducteurs électriques, du fait qu'il occupe une position centrale dans le véhicule.

On notera que, bien que l'on ne revendique le guidage que d'un conducteur, le plancher peut en guider un nombre quelconque.

De préférence, les moyens de guidage sont des moyens de fixation des conducteurs, tels qu'un clip, un crochet, une butée, un film charnière (patte en matière plastique moulée dans le plancher, capable de se plier).

De préférence également, les moyens de guidage sont des moyens de protection des conducteurs, notamment une gorge. Dans ce cas, la gorge est formée par un renfoncement dans le plancher, de façon à ne pas faire saillie du plancher, ce qui assure une protection supplémentaire des conducteurs, tout en améliorant l'esthétique. Ces moyens de protection sont faciles à réaliser dans un plancher en matière plastique, alors qu'il est plus difficile d'en prévoir sur la caisse.

Selon un mode de réalisation préféré de l'invention, le plancher comprend des moyens de guidage d'au moins un conducteur capable de faire circuler tout le courant délivrable par la batterie du véhicule, c'est-à-dire en général un courant de plus de 50 Ampères. Ainsi, ces moyens de guidage sont capables de recevoir un conducteur de courants porteurs. Ce mode de réalisation est particulièrement intéressant. Plutôt que d'utiliser une multiplicité de conducteurs reliant chaque composant à un autre ou à la batterie, ces conducteurs ayant chacun des performances et longueurs différentes, et dépendant en outre des options prévues sur le véhicule, la technologie des courants porteurs permet de gérer toutes ces diversités au moyen d'un seul conducteur, sur lequel chaque composant est monté en dérivation. Non seulement le nombre de conducteurs traversant le véhicule est considérablement diminué, mais il est en outre facile de rajouter ou modifier des connexions électriques, par simple programmation, sans pour autant modifier la structure du conducteur.

Le plancher peut également comprendre des moyens de guidage de tout autre conducteur capable de mettre en oeuvre du multiplexage.

De préférence, les moyens de guidage de ce conducteur sont ménagés sensiblement à la périphérie du plancher. Ainsi, le conducteur de courants porteurs peut « faire le tour » du plancher, si bien que tous les composants agencés autour du plancher peuvent facilement « puiser » dans ce conducteur la puissance et les données nécessaires à leur fonctionnement.

L'invention peut en outre comporter l'une ou plusieurs des caractéristiques suivantes.
- Le plancher comprend des moyens de réception de la batterie du véhicule.
- Le plancher comprend des moyens de réception de composants électroniques, par exemple des moyens de régulation de climatisation, un calculateur nécessaire au fonctionnement du véhicule, des moyens d'éclairage, un dispositif GPS, un composant multimédia tel que autoradio, lecteur de CD ou DVD.
- Les moyens de guidage sont adaptés pour guider un conducteur se présentant sous la forme d'un câble plat ou d'une pièce rigide de métal. Cette pièce rigide de métal peut avantageusement assurer une fonction de renfort du plancher.
- Les moyens de guidage sont configurés pour positionner le conducteur de façon suffisamment accessible pour y connecter un autre conducteur. Ainsi, il est possible de perforer l'isolant du conducteur, de façon à pouvoir brancher l'autre conducteur dessus. Cette connexion permet par exemple de monter l'ensemble des composants électriques ou électroniques en dérivation sur un conducteur de courants porteurs.
- Le plancher s'étend dans la direction longitudinale du véhicule depuis le coffre jusqu'au tablier.

L'invention a également pour objet un ensemble d'un plancher en matière plastique de véhicule automobile et d'un conducteur électrique, caractérisé en ce que le conducteur électrique est surmoulé dans la matière plastique du plancher. Un tel ensemble est particulièrement intéressant pour assurer une protection et une fixation fiables et esthétiques du conducteur sur le plancher.

Le plancher de cet ensemble peut reprendre l'une ou plusieurs des caractéristiques du plancher décrit ci-dessus, que l'homme du métier saura aisément adapter.

L'invention a enfin pour objet un procédé d'assemblage d'un véhicule automobile, comportant les étapes suivantes :
- on fabrique un plancher en matière plastique et on guide un conducteur électrique sur le plancher, selon une certaine position,
- on monte le plancher, équipé du conducteur, sur le véhicule, en conservant globalement le conducteur dans cette position.

L'invention sera mieux comprise à la lecture de la description qui va suivre, donnée uniquement à titre d'exemple et faite en se référant aux dessins dans lesquels :
- la figure 1 est un schéma en perspective d'une caisse et d'un ensemble d'un plancher et d'un conducteur électrique selon un premier mode de réalisation de l'invention ;
- la figure 2 est un schéma fonctionnel du plancher de la figure 1 ;
- la figure 3 est un schéma en coupe d'un moyen de guidage réalisé dans un plancher selon un deuxième mode de réalisation de l'invention ; et
- la figure 4 est un schéma en coupe d'un moyen de guidage réalisé dans un plancher selon un troisième mode de réalisation de l'invention.

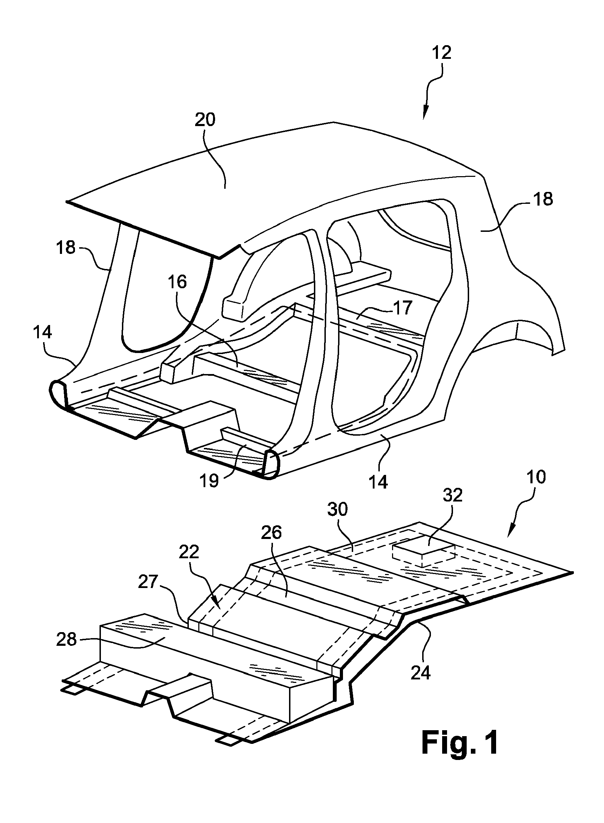

Un plancher 10 en matière plastique, représenté sur la figure 1, est rapporté sur la caisse 12 d'un véhicule automobile, munie de bas de caisse latéraux 14, d'une traverse centrale 16 appelée planche à talon, d'une traverse de train 17, d'une traverse 19 de fin de plancher, de montants verticaux 18 et d'un pavillon 20.

Le plancher 10 comporte une coque supérieure 22 et une coque inférieure 24. Mais cette structure en deux coques n'est pas liée à l'invention. Une autre structure de plancher, par exemple en une seule couche, conviendrait aussi pour mettre en oeuvre l'invention. Il est configuré de façon à pouvoir être rapporté sur la caisse par en-dessous. Il s'étend entre le coffre du véhicule et l'avant du véhicule, notamment sous les sièges des passagers arrière. Il pourrait également s'étendre à l'arrière jusqu'à la jupe arrière du véhicule, et/ou à l'avant jusqu'au bas du tablier du véhicule.

La coque supérieure 22 comprend un enfoncement 26 s'emboîtant dans la traverse de train 17, un enfoncement 27 s'emboîtant dans la planche à talon 16 et une surface 28 servant de repose-pieds pour les passagers. Les sièges arrière du véhicule sont positionnés au-dessus de la coque 22, entre les enfoncements 26 et 27.

Un conducteur électrique 30 est surmoulé dans la matière plastique du plancher 10 à la périphérie du plancher. Ce conducteur électrique est constitué d'un câble plat comprenant deux conducteurs montés en parallèle, l'un des deux servant de masse (un seul conducteur pourrait suffire, le retour de masse étant alors réalisé par la caisse du véhicule). Le câble 30 peut faire circuler un courant d'intensité supérieure à 50 Ampères, de préférence supérieure à 80 Ampères, ce courant pouvant être modulé de façon à transmettre des données de commande des composants.

Dans une variante (non représentée), le conducteur est une pièce rigide telle qu'une petite poutre métallique, qui assure une fonction de rigidification du plancher en plus de sa fonction de conducteur électrique.

Le conducteur 30 est relié à la batterie 32 du véhicule, elle-même intégrée dans le plancher 10.

Le procédé de montage du véhicule consiste tout d'abord à réaliser le plancher en surmoulant de la matière plastique sur le conducteur 30, fixant ainsi le conducteur selon une certaine position. On termine le montage du plancher 12, par exemple en y ajoutant des composants (électroniques ou non), puis on le rapporte sur la caisse 12. On termine l'assemblage du véhicule, en montant d'autres composants du véhicule, globalement sans modifier la position du conducteur 30, si ce n'est en ses extrémités.

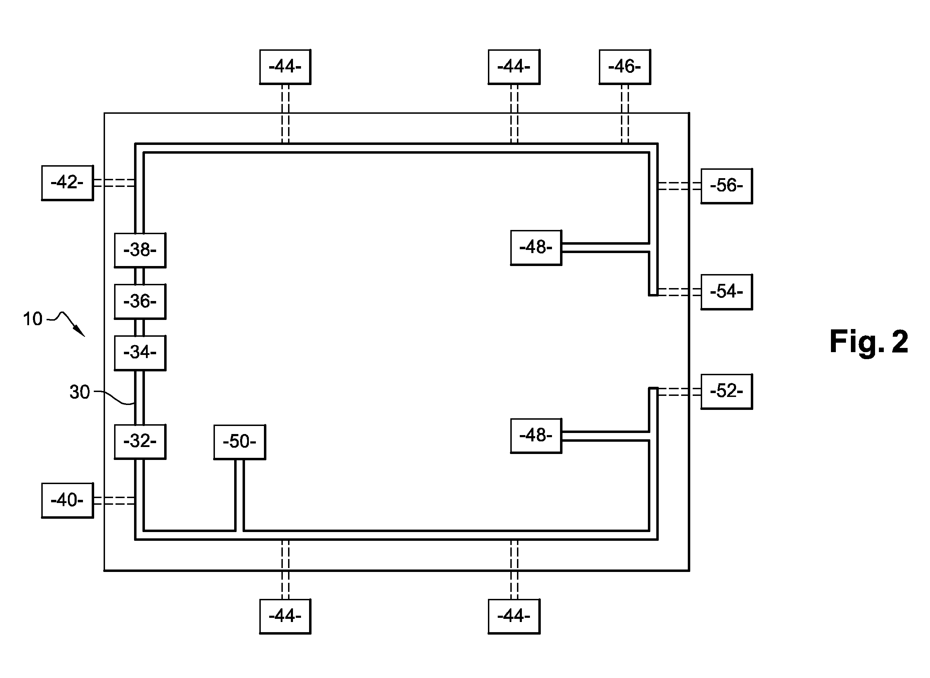

Comme on peut le voir sur la figure 2, une fois le véhicule assemblé, le conducteur 30 permet d'alimenter un certain nombre de composants électriques et électroniques. Ces composants électriques et électroniques sont montés en dérivation sur le conducteur 30, de façon à y lire les informations nécessaires à leur fonctionnement.

Chaque composant peut décoder l'information circulant dans le conducteur 30 à l'aide d'une unité de décodage propre, capable de sélectionner les informations nécessaires au fonctionnement du composant en question. Les différentes unités de décodage peuvent être fixées directement sur le composant, ou bien être fixées dans le plancher 10, de préférence avant l'assemblage du plancher sur le véhicule.

Les composants électroniques reliés au conducteur 30 comprennent un calculateur 34, un détecteur GPS 36, un lecteur DVD 38, des moyens 40 de commande du hayon arrière, des moyens 42 de commande d'autres éléments électroniques du bloc arrière, par exemple des dispositifs de signalisation, des moyens 44 de commande des portes, des moyens 46 de commande du toit, des moyens 48 de commande des sièges avant, des moyens 50 de surveillance ou de commande du réservoir, des moyens 52 de gestion du moteur, des moyens 54 de commande de la planche de bord, et d'autres composants électroniques du bloc avant 56.

Parmi tous ces composants, certains sont pré-montés sur le plancher 10 avant son assemblage sur le véhicule. En outre, certains des conducteurs reliant les composants électroniques au conducteur 30 sont montés sur le plancher avant son assemblage sur la caisse.

Parmi les composants montés avant l'assemblage du plancher se trouvent le réservoir, associé aux moyens 50, le calculateur 34, le détecteur GPS 36, le lecteur DVD 38 ainsi que les moyens 48 de commande des sièges. Les autres composants sont montés après l'assemblage du plancher 10 sur la caisse 12.

On notera que l'invention n'est pas limitée au mode de réalisation précédemment décrit.

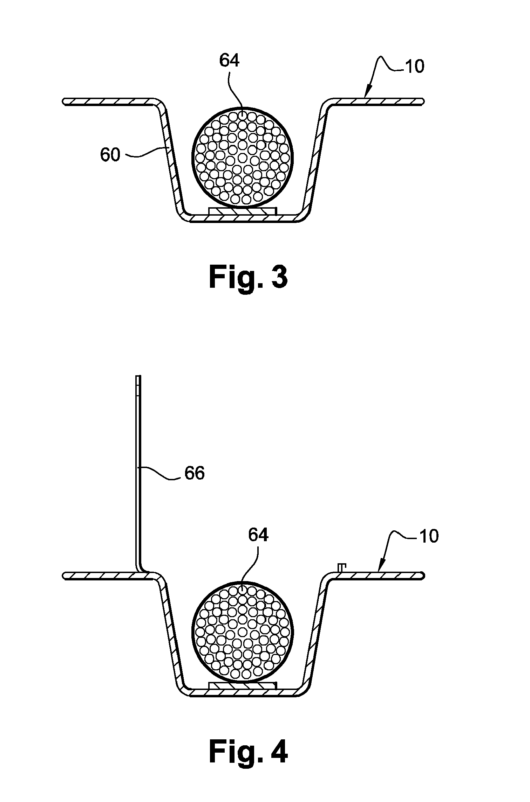

En particulier, on peut remplacer le conducteur surmoulé par un conducteur rapporté et guidé à l'aide de moyens réalisés d'un seul tenant avec le plancher 10. Par exemple, comme on peut le voir sur la figure 3, les moyens de guidage sont constitués d'une gorge 60 formée par un renfoncement du plancher 10. Cette gorge reçoit un conducteur 64, composé de plusieurs fils non isolés, capables de faire circuler un courant de forte intensité, délivré par la batterie, en utilisant la technologie des courants porteurs. Le conducteur 64 est collé au fond de la gorge 62. En outre, on peut rajouter un moyen de fixation supplémentaire, un film charnière 66, permettant d'augmenter la protection du conducteur 64.

Parmi les avantages de l'invention, on notera que l'on obtient un plancher prééquipé en conducteurs électriques, ce qui permet de monter ces conducteurs directement sur le plancher 10, sans que les opérateurs ne soient gênés par la configuration de la caisse 12. On dispose ainsi d'un plancher de type « carte-mère » auquel sont associés différents périphériques, les composants électroniques.

## Revendications

1. Plancher (10) de véhicule automobile, **caractérisé en ce qu'**il est réalisé en matière plastique et comportant des moyens de guidage d'au moins un conducteur électrique (30) de courants porteurs, ces moyens de guidage étant réalisés d'un seul tenant avec le plancher.

2. Plancher selon la revendication 1, dans lequel les moyens de guidage sont des moyens de fixation des conducteurs, notamment un clip, un crochet, une butée ou un film charnière.

3. Plancher selon la revendication 1 ou 2, dans lequel les moyens de guidage sont des moyens de protection des conducteurs, notamment une gorge formée par un renfoncement dans le plancher.

4. Plancher selon l'une quelconque des revendications 1 à 3, comprenant des moyens de réception de la batterie (32) du véhicule.

5. Plancher selon l'une quelconque des revendications 1 à 4, comprenant des moyens de guidage d'au moins un conducteur (30) capable de faire circuler tout le courant délivrable par la batterie du véhicule, c'est-à-dire en général un courant de plus de 50 Ampères.

6. Plancher selon la revendication 5, dans lequel les moyens de guidage de ce conducteur sont ménagés sensiblement à la périphérie du plancher.

7. Plancher selon l'une quelconque des revendications 1 à 6, comprenant des moyens de réception de composants électriques et électroniques (34 à 56), par exemple des moyens de régulation de climatisation, un calculateur nécessaire au fonctionnement du véhicule, des moyens d'éclairage, un dispositif GPS, un composant multimédia tel que autoradio, lecteur de CD ou DVD.

8. Plancher selon l'une quelconque des revendications 1 à 7, dans lequel les moyens de guidage sont adaptés pour guider un conducteur se présentant sous la forme d'un câble plat ou d'une pièce rigide de métal.

9. Plancher selon l'une quelconque des revendications 1 à 8, dans lequel les moyens de guidage sont configurés pour positionner le conducteur de façon suffisamment accessible pour y connecter un autre conducteur.

10. Plancher selon l'une quelconque des revendications 1 à 9, s'étendant dans la direction longitudinale du véhicule depuis le coffre jusqu'au tablier.

11. Ensemble d'un plancher (10) de véhicule automobile en matière plastique et d'un conducteur électrique (30) de courants porteurs, **caractérisé en ce que** le conducteur électrique est surmoulé dans la matière plastique du plancher.

12. Utilisation de courants porteurs dans un plancher selon l'une quelconque des revendications 1 à 10 ou dans un ensemble selon la revendication 11.

13. Procédé d'assemblage d'un véhicule automobile, comportant les étapes suivantes :
- on fabrique un plancher en matière plastique, le plancher étant destiné à conduire des courants porteurs, et on guide un conducteur électrique de courants porteurs sur le plancher, selon une certaine position,
- on monte le plancher, équipé du conducteur, sur le véhicule, en conservant globalement le conducteur dans cette position.
